# EUROPEAN PATENT SPECIFICATION

(11) **EP 3 463 896 B1**
(45) Date of publication and mention of the grant of the patent: **04.10.2023**
(21) Application number: 17803571.3
(22) Date of filing: 25.05.2017
(51) Int. Cl.: B41J 2/01, B41M 5/52, C08F 2/48, B41M 5/00, B41M 7/00, C09D 11/12, C09D 11/40, C09D 11/101, C09D 11/322, C09D 11/38

(54) **SINGLE PASS PRINTING OF WHITE ON CORRUGATED BOARD**
EINZELSCHRITTDRUCKEN VON WEISS AUF WELLPAPPE
IMPRESSION MONOPASSE DE BLANC SUR CARTON ONDULÉ

(30) Priority: 25.05.2016 US 201662341303 P; 25.05.2016 US 201662341295 P; 29.03.2017 US 201715472630; 24.05.2017 US 201715603880
(43) Date of publication of application: 10.04.2019
(73) Proprietor: Electronics for Imaging, Inc., Fremont, CA 94555 (US)
(72) Inventor: SAMUEL, Joshua, Fremont CA 94555 (US); BILLOW, Steven, A., Fremont CA 94555 (US); BRUCK, Frank, J., Fremont CA 94555 (US); ZHANG, Huilei, Fremont CA 94555 (US)
(74) Representative: Zinkler, Franz
(86) International application number: PCT/US2017/034446
(87) International publication number: WO 2017/205608

(56) References cited:
- US-A1- 2011 109 712
- US-A1- 2014 118 451
- US-A1- 2014 313 267
- US-B1- 7 736 706
- US-B2- 7 837 318

## Description

### TECHNICAL FIELD

This invention relates to a method of single pass printing white on an absorbent non-white substrate by applying a primer composition to seal selected surfaces of the non-white substrate such as a corrugated board and printing a white layer onto the surface, which can serve as a basis for printing colored transparent inks such as a CMYK or CMYKOV set.

### BACKGROUND OF THE INVENTION

Currently corrugated boards are inkjet printed in single pass printing on a white substrate that enables the user to print a large gamut using transparent inks (non-scattering but absorbing light to give color) based either on a CMYK set or an extended gamut set such as a CMYKOV set. In multi-pass printing, printers are equipped with a white layer that can be put down underneath a color if the substrate is not white.

Corrugated board commonly comes in a brown color termed Kraft. A white substrate that can deliver a large gamut with transparent process color inks imposes a high cost and does not enable the user to print on the most cost effective material. In addition, the brown color of the Kraft board can be deemed an advantage lending a natural look.

As opposed to pigments that impart their color to an ink by absorption of light, white is imparted by a process of scattering light back to the viewer with minimal absorption. White inks preferably contain high index refraction particles such as titanium dioxide with a particle size optimized to scatter light.

Inkjet inks have inherently low viscosity, when printing inkjet inks in a single pass directly on to porous substrates such as brown Kraft corrugated board, the ink particles tend to absorb into the paper and the white essentially disappears.

Inkjet inks used for drop on demand (DOD) printing need to use low viscosity materials to yield a viscosity of up to approximately 12 mPa.s (cP) at jetting temperatures. Monomers have low molecular weight and high vapor pressure. Many of the monomers used in the inkjet inks have distinct odors that can lead to taint when used on secondary or tertiary packaging.

Monomers may have multiple acrylate groups. The higher number of acrylate groups leads to a polymer with a higher degree of cross linking, which reduces odor. A higher degree of cross linking also leads to a faster curing material and a harder material. However, higher cross linking will lead to a more brittle ink which will not be acceptable for application that requires bending of the ink layer without cracking such as in corrugated board where creasing is required.

There exists a need for a single pass printing process to print white on corrugated board; the white ink preferably is a fast curing, flexible, low odor ink. The white-printed corrugated board should not have undesired odor.

### DETAILED DESCRIPTION OF THE INVENTION

The present invention relates to single pass printing white on corrugated board. More specifically, the present invention relates to printing a white under-layer on corrugated board that is not white, for example Kraft brown, to enable a process of color printing with a set of inks CMYK (cyan, magenta, yellow, black) or extended gamut inks such as CMYKOV.

The inventors have discovered that in order to effectively lay down white on corrugated board in single pass printing, the printing process must be managed so that the white stays on the surface. To implement this strategy, the surface of the corrugated board must be sufficiently sealed against absorption before printing the white ink on the surface. This priming step is uniquely required for single pass printing. For multi-pass printing, the priming step is not required because of a short time to lamp (0.1 to 0.2 seconds), which reduces the extent to which the ink can penetrate before it is cured, and the sequential nature of the buildup due to multi-pass printing, where the previous layer serves to partially seal before the next layer is applied, allowing depositing an opaque ink successfully on an unprimed surface.

### Single Pass Printing Process

The present invention is directed to a method for single pass printing on an absorbent non-white substrate. The method comprises: (a) applying a primer composition to one or more selected surfaces of an absorbent non-white substrate to form a primer layer to seal the selected surfaces of the substrate, (b) drying the primer layer, (c) printing a white ink on the primer layer, and (d) drying or curing the white ink with actinic radiation.

In step (a), a primer composition is applied to one or more selected surfaces of a substrate to form a primer layer to seal the selected surfaces of the substrate. The substrate is an absorbent non-white substrate such as corrugated board, e.g., a brown Kraft. The primer can be applied to one or more portions of the surface, or the entire surface, of the substrate.

"A primer", as used herein, is an undercoat or a preparatory coating put on a substrate before printing with a white ink. The primer seals the surface of the substrate sufficiently so that the white ink will remain on the surface of the substrate and remain white. Without a primer, the white ink loses almost all opacity. Typically a primer is transparent and allows for glossy overprint. The primer must insure a good adhesion and enable sufficient spread of the white ink.

The primer composition can be a water based composition or a UV curable composition. The primer composition may be applied using common analogue techniques such as a chambered anilox or a roll coater.

In a preferred embodiment, the primer composition is a water based composition comprising an acrylic polymer emulsion, a defoamer, a surfactant, wax, and water.

"An acrylic polymer emulsion" refers to an emulsion containing an acrylic polymer or an acrylic copolymer. For example, the acrylic copolymer is a copolymer of styrene and acrylic acid ester. In the primer composition, the non-volatile acrylic polymer in general is 30-to 44% w/w, and the polymer solution is in general 60% to 90% w/w. Examples of styrenated acrylic polymers include Micryl 783 from Michelman, MICHEM^{®} Flex R1924 from Michelman, JONCRYL^{®} 89 from BASF, and JONCRYL^{®} 77 from BASF,

Unless otherwise specified, all % in this application refers to weight (w/w) percentage.

A defoamer provides low foam stabilization and is in general 0.01 to 0.5% w/w in the primer composition. Examples of defoamers are BYK 024 from Byk Chemie and BYK 1640 from Byk Chemie.

A surfactant or a wetting agent may be non-ionic, anionic or cationic. A surfactant reduces surface tension and is in general 0.05% to 1.0 % w/w or 0.05-0.5% in the primer composition. Example of surfactants include Byk 3410 or Byk Dynwet 800N.

A wax provides rub and scratch resistance and allows for gloss matching of the overprint to limit gloss differential of primer and overprint. The wax is in general 1-10% w/w in the primer composition. Examples of waxes include MICHEM^{®} wax dispersion 91530 from Michelman, or BYK aquacer 2500 wax from Byk Chemie.

In one embodiment, the primer composition contains 38-44 % w/w of styrene-acrylic polymer, 0.05-0.5% w/w defoamer, 0.2-1.0% surfactant, 2.0-6.0% w/w wax, and water.

In step (b), the primer is dried by a suitable method such as infrared heated air sweep.

In step (c), a white ink is printed on the dried primer layer. The white ink typically has an opacity of 65% to 85%. The white ink is applied by inkjet printheads. The white ink has a sufficient loading of TiO₂ above 30% and preferably above 35%, so that a single set of inkjet heads can deliver the required opacity.

In step (d), the white ink is dried or cured by actinic radiation. "Actinic radiation", as used herein, refers to electromagnetic radiation that can induce a photochemical reaction; e.g. radiation by UV light from an arc lamp or an LED source. Specific wavelengths utilized for curing in general range from 200 to 450nm.

In certain situations, it is desirable to apply a color ink on top of the white ink. Printing white in specific areas enables a process to deliver a wide gamut of color inks on those areas under-printed with white. The white ink must be dried or cured before a further color ink is applied. The white ink is dried or cured to a degree that the overprinting color ink can spread over the underlayer white ink, and yield continuous print without excessive graininess. The color ink is typically deposited by a line of inkjet heads. After the color ink is applied, the color ink can be dried or cured with any form of actinic radiation, preferably with LED light.

### Low Odor White and Color Ink Compositions

In one preferred embodiment, the white ink and/or the color ink used in the present process is a fast curing, flexible, low odor ink. The present invention provides an ink that has a very low odor and good flexibility. The ink is curable by actinic radiation, more specifically using LED generated light. The ink is designed to be suitable for packaging, particularly for single pass printing on paper-based corrugated material. The ink exhibits minimal odor in the wet state and in the fully cured state.

The present invention provides a low odor radiation curable white ink composition and a low odor non-white color ink composition. Low odor is defined by the response of a panel of people who are not habituated to the printed article. Low odor does not have a strong smell or an undesired smell, and is in general acceptable to people.

The present low odor white ink composition comprises: 10-40% w/w of 4-hydroxybutylacrylate (4HBA), 0.5-10% of one or more urethane (meth)acrylate oligomer, 10-55% of diacrylates, one or more photoinitiators, and one or more additives.

The present low odor non-white color ink composition comprises: 10-40% w/w of 4-hydroxybutylacrylate (4HBA), 1-25% of one or more urethane (meth)acrylate oligomer, 10-55% of diacrylates, one or more photoinitiators, and one or more additives.

The present ink composition provides a low viscosity of about 9~14 mPa.s (cP) at 45°C which is required to be able to jet from the printer head.

The present low odor ink composition excludes monofunctional monomers that have an undesired odor such as vinyl caprolactam, 2-phenoxyethyl acrylate, isodecyl acrylate, 3,3,5-trimethylcyclohexyl acrylate, isooctyl acrylate, octyldecyl acrylate, isobornyl acrylate, cycloaliphatic acrylate monomer, benzyl acrylate, di(ethylene glycol) 2-ethylhexyl acrylate, tridecyl acrylate, 2(2-ethoxyethoxy) ethyl acrylate, lauryl acrylate, and tetrahydrofurfuryl acrylate. By exclusion, it means that the ink composition does not contain a substantial amount of the undesired monofunctional monomers. "A substantial amount", as used herein, refers to at least 5%, preferably at least 1%, at least 0.3%, or at least 0.1%.

The present low odor composition uses a limited number of monoacrylates that have been identified as low odor, in combination with 4-HBA. These compounds have acceptably high cure rates in combination with a diacrylate at a sufficiently low level to enable a fast cure rate with sufficient flexibility and with an acceptably low odor for applications such as tertiary packaging.

### Mono Functional Monomers

The present low odor white ink composition comprises 10-40%, by weight of one or more mono-functional monomers that have no odor and acceptable low odor.

The present low odor non-white color ink composition comprises 10-50%, by weight of one or more mono-functional monomers that have no odor and acceptable low odor.

Mono-functional monomers do not crosslink with each other and provide flexibility of ink film after curing. 4-Hydroxybutyl acrylate (4HBA, CAS No.: 2478-10-6), which is a polymerizable monofunctional monomer, is an essential mono-functional monomer in the present ink composition. 4HBA has a low viscosity and has low odor; it has sufficiently high flexibility with a high cure rate. 4HBA, with a primary hydroxyl group at the end of a longer alkyl chain, gives excellent scratch resistance due to its high crosslinking ratio and unique flexibility. The present ink composition comprises 10-40% w/w of 4HBA, and preferably 10-25% 4HBA.

The present low odor ink composition optionally includes other low-odor mono-functional monomers. In one embodiment, mono-functional monomers include acrylates or methacrylates. In another embodiment, mono-functional monomers include a vinyl ether. Examples of suitable mono-functional monomers for the present ink composition include, but are not limited to, cyclic trimethylolpropane formal acrylate (SR531), Genomer 1122 (a urethane acrylate) from RAHN, ethyl vinyl ether, and mono-functional methoxylated PEG (350) acrylate (SR551), alkoxylated phenol acrylate monomer (SR9087), alkoxylated tetrahydrofurfuryl acrylate (SR611), ethoxylated (4) nonyl phenol acrylate (SR504), and ethoxylated (8) nonyl phenol acrylate (Miramer M166 from RAHN).

Monomers that have odor and are excluded from the present low odor ink composition are shown in Table 1.

**Table 1.**

| **Strong Smell** | **Chemical Name** | **CAS #** | **Viscosity cP** |
|---|---|---|---|
| VCAP | Vinyl caprolactam | 2235-00-9 | |
| PHEA | 2-phenoxyethyl acrylate | 48145-04-6 | 12 |
| IDA | Isodecyl acrylate | 1330-61-6 | 5 |
| TMCHA | 3,3,5-trimethylcyclohexyl acrylate | 86178-38-3, 116-02-9 | 6 |
| IOA | isooctyl acrylate | 29590-42-9 | 5 |
| ODA | Octyldecyl acrylate | 2499-59-4, 2156-96-9 | 4 |
| IBOA | Isobornyl acrylate | 5888-33-5 | 8 |
| TBCHA | Cycloaliphatic acrylate monomer | 84100-23-2 | 9 |
| BZA | Benzyl acrylate | 2495-35-4 | 5 |
| EH(EO)2A | Di(ethylene glycol) 2-ethylhexyl acrylate | 117646-83-0 | 15 |
| | | | |

| **Smell** | **Chemical Name** | **CAS #** | **Viscosity** |
|---|---|---|---|
| TDA | Tridecyl acrylate, | 1330-61-6 | 7 |
| EOEOEA | 2(2-ethoxyethoxy) ethyl acrylate | 7328-17-8 | 6 |
| LA | Lauryl acrylate | 2156-97-0 | 6 |

| **Smell, volatility and irritation** | | | |
|---|---|---|---|
| THFA | Tetrahydrofurfuryl acrylate | 2399-48-6 | 6 |

Other than vinyl Caprolactam, the above excluded monomers are monofunctional acrylates. Monofunctional acrylates are important components for the present ink composition because they provide sufficient flexibility of the ink. Monofunctional acrylates have only one acrylate group, and if they exhibit a strong odor, they are most prone to leaving a residual odor in the cured product because they do not crosslink completely into the film and are volatile.

Although vinyl Caprolactam has many useful properties such as fast cure speed especially concerning surface cure, low viscosity, good solvency, strong adhesion, it excluded from the present ink composition due to its odor.

### Diacrylates

In addition to mono-functional monomers, the present ink composition comprises 10-55%, preferably 30-55%, of acceptable low odor or no odor di-functional monomers to speed up the polymerization process and increase the chemical resistance. Examples of suitable difunctional monomer include, but are not limited to, diacrylate or dimethacrylate of diols and polyetherdiols, such as propoxylated neopentyl glycol diacrylate, 1, 6-hexanediol diacrylate, dipropylene glycol diacrylate, tripropylene glycol diacrylate, triethylene glycol diacrylate, 1,4-butanediol diacrylate (e.g, SR213), alkoxylated aliphatic diacrylate (e.g. SR9209A), diethylene glycol diacrylate, alkoxylated hexanediols diacrylates (e.g, SR561, SR 562, SR563, SR564 from Sartomer Co., Inc), polyethylene glycol (200) diacrylate (SR259), and polyethylene glycol (400) diacrylate (SR344).

Preferred diacrylates for the present ink composition includes propoxylated neopentyl glycol diacrylate (CAS No: 84170-74-1), 1, 6-hexanediol diacrylate (CAS No: 13048-33-4), dipropylene glycol diacrylate (CAS No: 57472-68-1), and tripropylene glycol diacrylate (CAS No: 42978-66-5).

### Triacrylates

In addition to mono-functional and difuctional monomers, the low odor white ink composition may comprise 1-30%, preferably 1-10%, of acceptable low odor or no odor trifunctional monomers to speed up the polymerization process and increase the chemical resistance. Examples of suitable tri-functional monomer include, but are not limited to, such as ethoxylated (3) trimethylolpropane triacrylate (SR454), ethoxylated (6) trimethylolpropane triacrylate (SR499), trimethylolpropane triacrylate (SR351), propoxylated (3) glyceryl triacrylate (SR9020), propoxylated (3) trimethylolpropane triacrylate (SR492), propoxylated (3) trimethylolpropane triacrylate (SR494), and propoxylated (6) trimethylolpropane triacrylate (SR501).

Preferred triacrylates for the present ink composition include ethoxylated (3) trimethylolpropane triacrylate (CAS No: 28961-43-5), trimethylolpropane triacrylate (CAS No: 15625-89-5), and propoxylated (3) trimethylolpropane triacrylate (CAS No: 53879-54-2).

### Urethane (meth)acrylate oligomer

It is preferable to use an oligomer component of low viscosity, low volatility, high reactivity, low glass transition temperature, and good adhesion to multiple substrates in the ink compositions. The functionality of the oligomer component is preferably not greater than 3, and more preferably not greater than 2. The low functionality contributes to more flexible ink compositions.

The present ink composition comprises 0.5-25% of a flexible urethane acrylate oligomer. Urethane acrylate oligomers suitable for the present ink composition include CN9009, CN990, CN9900, CN991, from Sartomer, Ebercryl 8402, Ebercryl 8411 from Allnex, Genomer 4215, Genomer 4230 and Geonmer 4267 from RAHN, Miramer PU2100, Miramer PU2200 from MIWON, Photomer 6891, Photomer 6892 and Photomer 6230 from IGM, NeoRad U-61 and NeoRad U-20 from DSM.

### Photoinitiators

The ink composition of the present invention comprises 1-15% by weight of one or more photoinitiators.

Acylphosphine oxide photoinitiators include diphenyl(2,4,6-trimethylbenzoyl)phosphine oxide (TPO), phenylbis(2,4,6-trimethylbenzoyl)-phosphine oxide (Irgacure 819), ethyl (2,4,6-trimethylbenzoyl)-phenylphosphine oxide (TPO-L), and their derivatives and polymeric version derivatives.

Other useful photoinitiators that may be used in the present ink composition include, but are not limited to, 2-benzyl-2-dimethylamino-1-(4-morpholinophenyl)-butanone-1 (Irgacure 369), 2-methyl-1-[4-(methylthio)phenyl]-2-(4-morpholinyl)-1-propanone (Irgacure 907), 2-(4-methylbenzyl)-2-(dimethylamino)-4-morpholinobutyrophenone (Irgacure 379), 1- hydroxycyclohexylphenyl ketone, 2-hydroxy-4'-(2-hydroxyethoxy)-2-methylpropiophenone, 2-hydroxy-2-methyl-1-phenyl-1-propanone, oligo or dimer (2-hydroxy-2-methyl-1-[4-(1-methylvinyl) phenyl] propanone). Suitable blends of photoinitiators commercially available include, but are not limited to, those under the designations of Darocur 4265, Irgacure 2022, and Irgacure 2100 from BASF; and Esacure KT37, Esacure KT55, and Esacure KTO46 IGM.

### Additives

The present ink composition may further include 0.01-5%, preferably 0.1-3% by weight of one or more additive components. Various additives may be included in the ink compositions, including one or more of a surfactant, a leveling additive, a stabilizer, a colorant, and other suitable additives.

A surfactant is used to reduce the surface tension of the ink compositions to improve wetting property of the inks on substrates. The amount of surfactant in the ink compositions is 0.01-2% by weight, and preferably 0.05-1% by weight. It is preferred that the surfactant comprises at least one polysiloxane acrylate, also known as a silicone acrylate, which participates in the radiation curing process to be part of cured ink. Examples of a suitable surfactant include, but are not limited to, those under the designations of TEGORAD 2200N, TEGORAD 2100, TEGO WET 270 and TEGORAD 2300 from Evonik Resource Efficiency GmbH, TEGO Products and BYK 307, BYK 330, BYK 377 and BYK 3510 (BYK CHEMIE GMBH (Wesel, FRG).

A leveling additive may be used to improve the flowing property of ink to produce a more uniform surface of ink film. The amount of leveling agent in the ink compositions is 0.1-2% by weight. Examples of suitable leveling agent include, but are not limited to, those under the designation of BYK 361N, BYK 353, and BYK 354 and so on. (BYK CHEMIE GMBH).

A stabilizer is used to improve the shelf life and photolytic stability of ink compositions. Stabilizers in the ink compositions can include an ultraviolet light stabilizer and hindered amine light stabilizer. These stabilizers are used to improve the outdoor durability and weatherability of cured ink. Commercially available ultraviolet light stabilizers include, but are not limited to, those under the designation of TINUVIN^{®} 460, TINUVIN^{®} 479, TINUVIN^{®} 171, TINUVIN^{®} 928, TINUVIN^{®} 123, TINUVIN^{®} 1130, TINUVIN^{®} 400 TINUVIN^{®} 152 and TINUVIN^{®} 292 from BASF AG, Ludwigshafen, FRG. One or more UV inhibitor/stabilizers may be present in the ink compositions. They can be present in the ink compositions in amounts of 0.01%-2% by weight, and more specifically 0.1%-1% by weight.

A free radical scavenger stabilizer is used to improve the stability of ink against heat. Examples of a free radical scavenger include, but are not limited to, hydroquinone, 4-methoxyphenol, hindered phenol, etc. The amount of free radial scavenger stabilizer can be present in ink compositions in 0.05-2% by weight, and more specifically 0.1-0.75% by weight. A small amount is preferably used in the ink compositions to minimize their interference with the radiation curing process. Examples of free radical scavengers include, but are not limited to, hydroquinone, 4-methoxyphenol, hindered phenol such as IRGASTAB^{®} UV 22 (an in-can stabilizer that inhibits early polymerization in UV curable ink and coating formulations) from BASF, and IN515 tris(N-nitroso-N-phenyl-hydroxylamine)-aluminum salt+ 92% 2-phenoxyethyl acrylate) from IGM.

### Colorant component

The present white ink composition comprises white colorant component. The amount of white colorant component in the ink compositions is in the range of 10-35%, preferably 20-30% by weight.

Examples of suitable white pigments include, but are not limited to, those under the designation of titanium dioxide (including rutile and anatase); zinc sulfide, and the like or a mixture thereof.

The present non-white color ink composition comprises non-white colorant component. The amount of non-white colorant component in the ink compositions is in the range of 1-20%, preferably 1-8% by weight.

Examples of suitable non-white pigments include, but are not limited to, those under the designation of Pigment Blue 1, Pigment Blue 15, Pigment Blue 15:1, Pigment Blue 15:2, Pigment Blue 15:3, Pigment Blue 15:4, Pigment Blue 15:6, Pigment Blue 16, Pigment Blue 24, and Pigment Blue 60; Pigment Brown 5, Pigment Brown 23, and Pigment Brown 25; Pigment Yellow 3, Pigment Yellow 14, Pigment Yellow 16, Pigment Yellow 17, Pigment Yellow 24, Pigment Yellow 65, Pigment Yellow 73, Pigment Yellow 74, Pigment Yellow 83, Pigment Yellow 95, Pigment Yellow 97, Pigment Yellow 108, Pigment Yellow 109, Pigment Yellow 110, Pigment Yellow 113, Pigment Yellow 120, Pigment Yellow 128, Pigment Yellow 129, Pigment Yellow 138, Pigment Yellow 139, Pigment Yellow 150, Pigment Yellow 154, Pigment Yellow 156, and Pigment Yellow 175; Pigment Green 1, Pigment Green 7, Pigment Green 10, and Pigment Green 36; Pigment Orange 5, Pigment Orange 15, Pigment Orange 16, Pigment Orange 31, Pigment Orange 34, Pigment Orange 36, Pigment Orange 43, Pigment Orange 48, Pigment Orange 51, Pigment Orange 60, and Pigment Orange 61; Pigment Red 4, Pigment Red 5, Pigment Red 7, Pigment Red 9, Pigment Red 22, Pigment Red 23, Pigment Red 48, Pigment Red 48:2, Pigment Red 49, Pigment Red 112, Pigment Red 122, Pigment Red 123, Pigment Red 149, Pigment Red 166, Pigment Red 168, Pigment Red 170, Pigment Red 177, Pigment Red 179, Pigment Red 190, Pigment Red 202, Pigment Red 206, Pigment Red 207, and Pigment Red 224; Pigment Violet 19, Pigment Violet 23, Pigment Violet 37, Pigment Violet 32, Pigment Violet 42; and Pigment Black 6 or 7 (The Colour Index, Vols. 1-8, by the Society of Dyers and Colourists, Yorkshire, England), Black PB 2 and 5; carbon black; and the like or a mixture thereof.

The white pigment or non-white pigment is pre-dispersed prior to incorporation, generally into one or more of the monomer and/or oligomer components used in the ink compositions. In embodiments, the colorant is added as a pigment slurry prepared with a portion of a reactive diluent such as propoxylated 2-neopentyl glycol diacrylate (SR-9003, Sartomer USA, LLC), 1, 6-hexanediol diacrylate (SR-238, Sartomer), dipropylene glycol diacrylate (SR-508). Dispersion agents generally are used to improve the stability of dispersion by reducing or avoiding the possibility of pigment particle settling or agglomerating. Examples of suitable dispersion agents include, but are not limited to, those under the designations of Solsperse 32000 from Lubrizol^{®} Advanced Materials, and DisperBYK 111 and DisperBYK180 from Byk Chemi^{®}. The pigment in the dispersion can be 20-80% by weight. Other additives such as stabilizers, flowing additive, etc. can be incorporated during the dispersion process to improve the stability of dispersion.

The invention is further illustrated by the following examples.

### EXAMPLES

### Example 1. A Primer Composition

Table 2 illustrates one primer composition suitable for the present invention.

**Table 2**

| Chemical | Function | Weight % |
|---|---|---|
| JONCRYL^{®} 2660 | Acrylic emulsion polymer | 75.0-80.0 |
| JONCRYL^{®} 60 | Acrylic emulsion polymer | 6.0-7.0 |
| FOAMMASTER^{®} MO 2111 | Defoamer | 0.05-0.15 |
| Hydropalat WE 3650 | Surfactant | 0.2-0.3 |
| JONCRYL^{®} Wax 26 | Wax | 4.0-6.0 |
| Water | | 14.3-6.55 |

### Example 2. A Primer Composition

Table 3 illustrates another primer composition suitable for the present invention.

**Table 3**

| Chemical | Function | Weight % |
|---|---|---|
| MICHEM^{®} 1924 | Acrylic emulsion polymer | 74.5-78.5 |
| JONCRYL^{®} 89 | Acrylic emulsion polymer | 6.25-12.5 |
| BYK 024 | Defoamer | 0.2-0.5 |
| BYK Dynwet 800 N | Surfactant | 0.5-1.0 |
| MICHEM^{®} Wax 91530 | Wax | 2.0-4.0 |
| Water | | 16.55-3.5 |

### Example 3. A low odor white ink composition

Table 4 illustrates the components for a low odor white ink composition.

**Table 4**

| Function | Chemical Name | weight % |
|---|---|---|
| Difunctional monomer | 1,6-hexanediol diacrylate (HDDA) | 24.5 |
| Difunctional monomer | Propoxylated (2) Neopentyl glycol diacrylate NPG(PO)2DA | 14 |
| Monofunctional monomer | 4-Hydroxybutylacrylate | 12 |
| Trifunctional monomer | Trimethylolpropane [3 PO] triacrylate (TMP3POTA) | 8 |
| Oligomer | OLIGOMER [-Aliphatic urethane diacrylate-] | 2 |
| Photoinitiator | TPO | 8 |
| Photoinitiator | TPO-L | 4 |
| Photoinitiator | IRGACURE^{®} 819 | 1 |
| Additive | Polyacrylate Leveling agent | 0.5 |
| Additive | Silicone-containing surface additive | 0.5 |
| Pigment | White pigment | 25 |
| Stabilizer | STABILIZER UV22 | 0.5 |
| | | 100 |

The above ingredients (chemicals) were added to a container, and mixed by magnetic or mechanic mixers to form a white ink. The pigment is added as a dispersion which is milled before addition in a media mill with the correct dispersant as described. The ink is then the ink was filtered through 1 micron filter.

### Example 4. A low odor non-white color ink composition

Table 5 illustrates the components for a low odor cyan ink composition.

**Table 5.**

| Function | Chemical Name | weight % |
|---|---|---|
| Difunctional monomer | Dipropylene glycol diacrylate DPGDA | 41.5 |
| Difunctional monomer | Propoxylated (2) neopentyl glycol diacrylate NPG(PO)2DA | 8 |
| Monofunctional monomer | 4-Hydroxybutyl acryl ate | 25 |
| Oligomer | Aliphatic urethane diacrylate | 10 |
| Photoinitiator | TPO | 5 |
| Photoinitiator | TPO-L | 5 |
| Photoinitiator | IRGACURE^{®} 819 | 2 |
| Additive | Polyacrylate Leveling agent | 0.5 |
| Additive | Silicone-containing surface additive | 0.5 |
| Pigment | Cyan pigment | 2 |
| Stabilizer | STABILIZER UV22 | 0.5 |
| | | 100 |

The above ingredients (chemicals) were added to a container, and mixed by magnetic or mechanic mixers to form the cyan ink. The cyan pigment is added as a dispersion prepared previously in a media mill. Then the ink was filtered through 1 micron filter.

The invention is now described in full, clear, concise and exact terms as to enable any person skilled in the art to which it pertains, to make and use the same. It is to be understood that the foregoing describes preferred embodiments of the present invention and that modifications may be made therein without departing from the scope of the present invention as set forth in the claims. To particularly point out and distinctly claim the subject matter regarded as invention, the following claims conclude the specification.

## Claims

1. A method for single pass printing on an absorbent non-white paper substrate, comprising:
applying a primer composition to one or more selected surfaces of the substrate to form a primer layer to seal the selected surfaces of the substrate,
drying the primer layer,
printing a white ink on the primer layer, and
drying or curing the white ink, wherein the primer composition is a water based composition comprising an acrylic polymer emulsion, a defoamer, a surfactant or a wetting agent, wax, and water.

2. The method according to Claim 1, wherein the white ink is cured with actinic radiation.

3. The method according to Claim 1, wherein the primer composition comprises 38-44% w/w styrene-acrylic acid ester copolymer, 0.05-0.5% w/w defoamer, 0.2-1% surfactant, 2.0-6.0% w/w wax, and water.

4. The method according to Claim 1, after drying or curing the white ink, further comprises the steps of depositing a color ink on top of the white ink, and drying or curing the color ink with actinic radiation.

5. The method according to Claim 1, wherein said white ink is a low odor radiation curable composition comprising:
10-40% w/w of 4-hydroxybutylacrylate,
0.5-10% of a urethane (meth)acrylate oligomer,
10-55% of diacrylates,
one or more photoinitiators,
one or more additives, and
a white pigment;
wherein the ink composition contains less than 1% of a monofunctional momoner that has an undesired odor selected from the group consisting of: vinyl caprolactam, 2-phenoxyethyl
acrylate, isodecyl acrylate, 3,3,5-trimethylcyclohexyl acrylate, isooctyl acrylate, octyldecyl acrylate, isobornyl acrylate, cycloaliphatic acrylate monomer, benzyl acrylate, di(ethylene glycol) 2-ethylhexyl acrylate, tridecyl acrylate, 2(2-ethoxyethoxy) ethyl acrylate, lauryl acrylate,
and tetrahydrofurfuryl acrylate.

6. A low odor radiation curable white ink composition, comprising:
10-40% w/w of 4-hydroxybutylacrylate,
0.5-10% of a urethane (meth)acrylate oligomer,
10-55% of diacrylates,
one or more photoinitiators,
one or more additives, and
a white pigment;
wherein the ink composition contains less than 1% of a monofunctional momoner that has an undesired odor selected from the group consisting of: vinyl caprolactam, 2-phenoxyethyl
acrylate, isodecyl acrylate, 3,3,5-trimethylcyclohexyl acrylate, isooctyl acrylate, octyldecyl acrylate, isobornyl acrylate, cycloaliphatic acrylate monomer, benzyl acrylate, di(ethylene glycol) 2-ethylhexyl acrylate, tridecyl acrylate, 2(2-ethoxyethoxy) ethyl acrylate, lauryl acrylate,
and tetrahydrofurfuryl acrylate.

7. The ink composition of claim 6, comprising 0.01-5% by weight of the one or more additives.

8. The ink composition of claim 7, wherein the additive is a surfactant, a leveling additive, dispersant, or a stabilizer.

9. The ink composition of claim 6, comprising 10-35% by weight of the white pigment.

10. The ink composition of claim 5, wherein the ink viscosity is 5-14 mPa.s (cP) at 45°C, or less than 30 mPa.s (cP) at 25°C.

## Patentansprüche

1. Ein Verfahren zum Einzeldurchlauf-Drucken auf einem saugfähigen, nicht-weißen Papiersubstrat, das folgende Schritte aufweist:
Auftragen einer Grundierungszusammensetzung auf eine oder mehrere ausgewählte Oberflächen des Substrats, um eine Grundierungsschicht zu bilden, um die ausgewählten Oberflächen des Substrats zu versiegeln,
Trocknen der Grundierungsschicht,
Drucken einer weißen Tinte auf der Grundierungsschicht, und
Trocknen oder Aushärten der weißen Tinte, wobei die Grundierungszusammensetzung eine wasserbasierte Zusammensetzung ist, die eine Acrylpolymer-Emulsion, ein Entschäumungsmittel, ein Tensid oder ein Benetzungsmittel, Wachs und Wasser aufweist.

2. Das Verfahren gemäß Anspruch 1, bei dem die weiße Tinte mit aktinischer Strahlung ausgehärtet wird.

3. Das Verfahren gemäß Anspruch 1, bei dem die Grundierungszusammensetzung 38-44 Gew-% Styrolacryl-Säureester-Copolymer, 0,05-0,5 Gew-% Entschäumungsmittel, 0,2-1 % Tensid, 2,0-6,0 Gew-% Wachs und Wasser aufweist.

4. Das Verfahren gemäß Anspruch 1, das nach dem Trocknen oder Aushärten der weißen Tinte ferner die Schritte des Aufbringens einer Farbtinte über der weißen Tinte und des Trocknens oder Aushärtens der Farbtinte mit aktinischer Strahlung aufweist.

5. Das Verfahren gemäß Anspruch 1, bei dem die weiße Tinte eine geruchsarme mit Strahlung aushärtbare Zusammensetzung ist, die folgende Merkmale aufweist: 10-40 Gew-% 4-Hydroxybutylacrylat,
0,5-10 % eines Urethan-(Meth-)Acrylat-Oligomers,
10-55 % Diacrylate,
einen oder mehrere Fotoinitiatoren,
ein oder mehrere Additive und
ein weißes Pigment;
wobei die Tintenzusammensetzung weniger als 1 % eines monofunktionalen Monomers enthält, das einen unerwünschten Geruch aufweist, ausgewählt aus der Gruppe bestehend aus: Vinylcaprolactam, 2-Phenoxyethylacrylat, Isodecylacrylat, 3,3,5-Trimethylcyclohexylacrylat, Isooctylacrylat, Octyldecylacrylat, Isobornylacrylat, cycloaliphatisches Acrylatmonomer, Benzylacrylat, Di(Ethylenglycol)-2-Ethylhexylacrylat, Tridecylacrylat, 2(2-Ethoxyethoxy)-Ethylacrylat, Laurylacrylat und Tetrahydrofurfurylacrylat.

6. Eine geruchsarme mit Strahlung aushärtbare Weiße-Tinte-Zusammensetzung, die folgende Merkmale aufweist:
10-40 Gew-% 4-Hydroxybutylacrylat,
0,5-10 % eines Urethan-(Meth-)Acrylat-Oligomers,
10-55 % Diacrylate,
einen oder mehrere Fotoinitiatoren,
ein oder mehrere Additive, und
ein weißes Pigment;
wobei die Tintenzusammensetzung weniger als 1% eines monofunktionalen Monomers enthält, das einen unerwünschten Geruch aufweist, ausgewählt aus der Gruppe bestehend aus: Vinylcaprolactam, 2-Phenoxyethylacrylat, Isodecylacrylat, 3,3,5-Trimethylcyclohexylacrylat, Isooctylacrylat, Octyldecylacrylat, Isobornylacrylat, cycloaliphatisches Acrylatmonomer, Benzylacrylat, Di(Ethylenglycol)-2-Ethylhexylacrylat, Tridecylacrylat, 2(2-Ethoxyethoxy)-Ethylacrylat, Laurylacrylat und Tetrahydrofurfurylacrylat.

7. Die Tintenzusammensetzung gemäß Anspruch 6, die 0,01-5 Gew-% des einen oder der mehreren Additive aufweist.

8. Die Tintenzusammensetzung gemäß Anspruch 7, bei der das Additiv ein Tensid, ein Verlaufadditiv, ein Dispergiermittel oder ein Stabilisator ist.

9. Die Tintenzusammensetzung gemäß Anspruch 6, die 10-35 Gew-% des weißen Pigments aufweist.

10. Die Tintenzusammensetzung gemäß Anspruch 5, bei der die Tintenviskosität bei 45 °C 5-14 mPa.s (cP) oder bei 25 °C weniger als 30 mPa.s (cP) beträgt.

## Revendications

1. Procédé d'impression en un seul passage sur un substrat de papier non blanc absorbant, comprenant le fait de:
appliquer une composition d'apprêt sur une ou plusieurs surfaces sélectionnées du substrat pour former une couche d'apprêt pour sceller les surfaces sélectionnées du substrat,
sécher la couche primaire,
imprimer une encre blanche sur la couche d'apprêt, et
sécher ou laisser durcir l'encre blanche, où la composition d'apprêt est une composition à base d'eau comprenant une émulsion de polymère acrylique, un antimousse, un tensioactif ou un agent mouillant, de la cire et de l'eau.

2. Procédé selon la revendication 1, dans lequel l'encre blanche est durcie par rayonnement actinique.

3. Procédé selon la revendication 1, dans lequel la composition d'apprêt comprend de 38 à 44% en poids de copolymère d'ester d'acide acrylique et de styrène, de 0,05 à 0,5% en poids d'antimousse, de 0,2 à 1% de tensioactif, de 2,0 à 6,0% en poids de cire, et de l'eau.

4. Procédé selon la revendication 1, comprenant par ailleurs, après séchage ou durcissement de l'encre blanche, les étapes consistant à déposer une encre de couleur au-dessus de l'encre blanche, et à sécher ou laisser durcir l'encre de couleur par rayonnement actinique.

5. Procédé selon la revendication 1, dans lequel ladite encre blanche est une composition durcissable par rayonnement à faible odeur comprenant:
de 10 à 40% en poids d'acrylate de 4-hydroxybutyle,
de 0,5 à 10% d'un oligomère de (méth)acrylate d'uréthane,
de 10 à 55% de diacrylates,
un ou plusieurs photo-initiateurs,
un ou plusieurs additifs, et
un pigment blanc;
dans laquelle la composition d'encre contient moins de 1% d'un monomère monofonctionnel qui présente une odeur indésirable sélectionné dans le groupe composé de: caprolactame de vinyle, d'acrylate de 2-phénoxyéthyle, d'acrylate d'isodécyle, d'acrylate de 3,3,5-triméthylcyclohexyle, d'acrylate d'isooctyle, d'acrylate d'octyldécyle, d'acrylate d'isobornyle, de monomère d'acrylate cycloaliphatique, d'acrylate de benzyle, d'acrylate de di(éthylène-glycol) 2-éthylhexyle, d'acrylate de tridécyle, d'acrylate de 2(2-éthoxyéthoxy) éthyle, d'acrylate de lauryle et d'acrylate de tétrahydrofurfuryle.

6. Composition d'encre blanche durcissable par rayonnement à faible odeur, comprenant:
de 10 à 40% en poids d'acrylate de 4-hydroxybutyle,
de 0,5 à 10% d'un oligomère d'uréthane (méth)acrylate,
de 10 à 55% de diacrylates,
un ou plusieurs photo-initiateurs,
un ou plusieurs additifs, et
un pigment blanc;
dans laquelle la composition d'encre contient moins de 1% d'un monomère monofonctionnel qui présente une odeur indésirable sélectionné dans le groupe composé de: caprolactame de vinyle, d'acrylate de 2-phénoxyéthyle, d'acrylate d'isodécyle, d'acrylate de 3,3,5-triméthylcyclohexyle, d'acrylate d'isooctyle, d'acrylate d'octyldécyle, d'acrylate d'isobornyle, de monomère d'acrylate cycloaliphatique, d'acrylate de benzyle, d'acrylate de di(éthylène-glycol) 2-éthylhexyle, d'acrylate de tridécyle, d'acrylate de 2(2-éthoxyéthoxy) éthyle, d'acrylate de lauryle et d'acrylate de tétrahydrofurfuryle.

7. Composition d'encre selon la revendication 6, comprenant de 0,01 à 5% en poids des un ou plusieurs additifs.

8. Composition d'encre selon la revendication 7, dans laquelle l'additif est un tensioactif, un additif de nivellement, un dispersant ou un stabilisant,

9. Composition d'encre selon la revendication 6, comprenant de 10 à 35% en poids du pigment blanc.

10. Composition d'encre selon la revendication 5, dans laquelle la viscosité de l'encre est de 5 à 14 mPa (cP) à 45°C, ou de moins de 30 mPa (cP) à 25°C.
